# EUROPÄISCHE PATENTSCHRIFT

(11) **EP 3 698 073 B1**
(45) Veröffentlichungstag und Bekanntmachung des Hinweises auf die Patenterteilung: **26.01.2022**
(21) Anmeldenummer: 18782391.9
(22) Anmeldetag: 02.10.2018
(51) Int. Cl.: F16J 15/34, F16L 27/08, G01M 3/00, G01M 13/005

(54) **GLEITRINGDICHTUNG ZUR ABDICHTUNG EINES EIN FLUID FÜHRENDEN KANALS UND/ODER RAUMES UND VERFAHREN ZUM ÜBERWACHEN DES VERSCHLEISSES EINER GLEITRINDICHTUNG**
MECHANICAL SEAL FOR SEALING A CHANNEL WHICH CONDUCTS A FLUID AND/OR A CHAMBER AND METHOD FOR MONITORING THE WEAR OF A MECHANICAL SEAL
GARNITURE D'ÉTANCHÉITÉ À ANNEAU GLISSANT POUR ASSURER L'ÉTANCHÉITÉ D'UN CONDUIT ET/OU D'UN ESPACE DE GUIDAGE DE FLUIDE ET PROCÉDÉ DE SURVEILLANCE DE L'USURE D'UNE GARNITURE D'ÉTANCHÉITÉ À ANNEAU GLISSANT

(30) Priorität: 19.10.2017 DE 102017218711
(43) Veröffentlichungstag der Anmeldung: 26.08.2020
(73) Patentinhaber: Christian Maier GmbH & Co. KG Maschinenfabrik, 89520 Heidenheim (DE)
(72) Erfinder: SCHWENK, Günther, 89520 Heidenheim (DE)
(74) Vertreter: Dr. Weitzel & Partner
(86) Internationale Anmeldenummer: PCT/EP2018/076757
(87) Internationale Veröffentlichungsnummer: WO 2019/076623

(56) Entgegenhaltungen:
- CN-B- 103 791 095
- DE-A1- 3 426 539
- US-A- 5 448 924
- US-A1- 2017 108 399

## Beschreibung

Die vorliegende Erfindung betrifft eine Gleitringdichtung zur Abdichtung wenigstens eines sich in einem stationären Bauteil und/oder einem rotierenden Bauteil erstreckenden, ein Fluid führenden Kanals und/oder Raumes gegenüber der Umgebung, gemäß dem Oberbegriff von Anspruch 1, sowie ein Verfahren zum Überwachen des Verschleißes einer solchen Gleitringdichtung.

Eine gattungsgemäße Gleitringdichtung und ein Verfahren zum Überwachen des Verschleißes einer solchen Gleitringdichtung ist aus DE 34 26 539 A1 bekannt. Die Gleitringdichtung weist einen um eine Drehachse umlaufenden Gleitring auf, der sich in Axialrichtung, das heißt in Richtung der Drehachse, mit seiner Stirnseite an einem Gegenring abstützt. Die Stirnseite bildet demnach die Dichtfläche aus.

Der Gleitring unterliegt aufgrund seiner Relativdrehung und der elastischen Abstützung gegen den Gegenring einem Verschleiß. Aufgrund des Verschleißes bewegt sich der Gleitring zunehmend in der Axialrichtung. Um einen rechtzeitigen Austausch des Gleitringes sicherstellen zu können, bevor der Gleitring zu stark abgenutzt ist und damit seine Dichtwirkung verliert, wird der Verschleiß dadurch erfasst, dass radial zum axial beweglichen Gleitring eine Sonde vorgesehen ist, welche erfasst, wie weit sich der Gleitring bereits relativ zur Sonde axial bewegt hat. Hierfür kann ein magnetischer Einsatz im Gleitring oder in einem sich mit dem Gleitring bewegenden Bauteil vorgesehen sein und die Sonde als elektromagnetischer Messfühler ausgebildet sein, welcher ein Signal des magnetischen Einsatzes erfasst, wobei das Signal ein Maximum erreicht, wenn die Abriebflächen den maximalen Abrieb erreicht haben.

Eine weitere Gleitringdichtung mit einem Positionssensor zur Erfassung der Position des Gleitringes in der Axialrichtung ist bekannt aus US 5,448,924.

Nachteilig bei der bekannten Gleitringdichtung ist, dass durch die Erfassung der axialen Position des Gleitringes, das heißt der Position des Gleitringes in der Axialrichtung, zwar ein permanent fortschreitender Verschleiß durch Abrieb des Gleitringes erfasst werden kann, der die Notwendigkeit eines Austausches des Gleitringes signalisiert, jedoch ein Schaden in der Dichtfläche des Gleitringes oder auch in der zugewandten Fläche des Gegenringes unentdeckt bleibt, wenn sich dieser Schaden nicht auf die axiale Position des Gleitringes auswirkt. Auch Risse im Gleitring, die zu einer Undichtigkeit führen, ohne sich auf die axiale Position auszuwirken, werden nicht erfasst.

Zum weiteren Stand der Technik wird verwiesen auf DE 197 24 308 A1 und DE 20 2007 001 223 U1. Beide Dokumente offenbaren die Erfassung einer Temperatur im Bereich eines Gleitringes einer Gleitringdichtung auf der das Fluid führenden Seite der Dichtfläche. Diese Temperatur wird ganz wesentlich von der Temperatur des zugeführten Fluids bestimmt und ermöglicht daher keinen sicheren Rückschluss auf einen Schaden, wie dieser zuvor dargestellt wurde.

DE 10 2006 008 463 A1 beschreibt eine Prüfvorrichtung zur Erfassung der Dampfemission an einer Leckagestelle von Gleitringdichtungen. Hierbei wird Druckluft in einen durch die Gleitringdichtung abgedichteten Raum geleitet, wobei die Druckluft über die Gleitringdichtung hinwegströmt und dabei das im regulären Betrieb der Gleitringdichtung dort vorgesehene Arbeitsmedium, insbesondere Wasser-Glykol-Gemisch, über die Gleitringdichtung mitreißt. Aus der Feuchtigkeit der Druckluft auf der Leckageseite der Gleitringdichtung kann dann auf den aktuellen Zustand der Gleitringdichtung geschlossen werden, beispielsweise bei einer Endabnahme der Gleitringdichtung.

Der vorliegenden Erfindung liegt die Aufgabe zugrunde, eine Gleitringdichtung zur Abdichtung eines Kanals und/oder Raumes, der sich in einem stationären und/oder in einem rotierenden Bauteil erstreckt und ein Fluid, wie Flüssigkeit oder Gas führt, und ein Verfahren zum Überwachen des Verschleißes einer solchen Gleitringdichtung anzugeben, bei welchen nicht nur der fortlaufende Verschleiß erfasst werden kann, sondern auch Schäden in der Dichtfläche oder Undichtigkeiten im Gleitring sicher erfasst werden.

Die erfindungsgemäße Aufgabe wird durch eine Gleitringdichtung und ein Verfahren gemäß den unabhängigen Patentansprüchen gelöst. In den abhängigen Patentansprüchen werden besonders vorteilhafte Ausgestaltungen der Erfindung angegeben.

Eine erfindungsgemäße Gleitringdichtung zur Abdichtung wenigstens eines sich in einem stationären Bauteil und/oder einem rotierenden Bauteil erstreckenden, ein Fluid führenden Kanals und/oder Raumes gegenüber der Umgebung weist einen Gleitring auf, der sich in Axialrichtung gegen einen Gegenring dichtend abstützt. Der wenigstens eine das Fluid führende Kanal erstreckt sich gemäß einer Ausführungsform der Erfindung aus einem stationären Bauteil in ein rotierendes Bauteil oder aus einem rotierenden Bauteil in das stationäre Bauteil, demnach durch eine Drehdurchführung. Die Drehdurchführung dient der Übergabe des Fluids aus dem jeweiligen Kanalabschnitt des stationären Bauteils in den jeweiligen Kanalabschnitt des rotierenden, das heißt um eine Drehachse umlaufenden Bauteils oder umgekehrt. Die Erfindung kann jedoch auch unabhängig von einer Drehdurchführung in jeglichem Bauteil angewendet werden, bei dem eine Abdichtung durch eine Gleitringdichtung Verwendung findet. Insofern ist der das Fluid führende Kanal ein beliebiger Raum in einem stationären Bauteil und/oder in einem rotierenden Bauteil, der durch die Gleitringdichtung gegenüber einer Umgebung abgedichtet wird. Bei der Umgebung kann es sich um einen anderen Raum in dem Bauteil und/oder einem anderen Bauteil handeln, oder um eine Umgebung, die nicht mehr durch Gehäuseteile eingeschlossen wird. Die Umgebung kann drucklos oder druckbeaufschlagt sein. Das Fluid kann in dem Kanal und/oder Raum strömen oder stationär sein. Nur beispielhaft wird auf die Abdichtung wenigstens eines ein Fluid führenden Kanals und/oder Raumes in einer Pumpe, wie Flüssigkeitspumpe oder Gaspumpe, einem Kompressor und anderen Arbeitsmaschinen verwiesen.

Dadurch, dass der Gleitring sich in der Axialrichtung, das heißt in Richtung der Drehachse des umlaufenden Bauteils, gegen den Gegenring dichtend abstützt, unterliegt er einem Verschleiß. Beispielsweise ist der Gleitring aus einem Kohlenstoff hergestellt beziehungsweise umfasst solchen Kohlenstoff. Um zu vermeiden, dass durch den Verschleiß, der den Gleitring in der Axialrichtung kürzt, eine Undichtigkeit, beispielsweise in der Drehdurchführung entsteht, ist der Gleitring in der Axialrichtung beweglich und zur Kompensation des Verschleißes mit seiner stirnseitigen Dichtfläche elastisch gegen den Gegenring abgestützt. Ein fortschreitender Verschleiß wird somit durch zunehmende axiale Verlagerung des Gleitringes in Richtung des Gegenringes kompensiert. Zusätzlich oder alternativ kann auch der Gegenring im Bereich einer an der Dichtfläche des Gleitringes anliegenden Gegenfläche einem Abrieb beziehungsweise Verschleiß unterliegen, sodass zu dessen Kompensation eine axiale Verlagerung des Gleitringes durch dessen elastische Vorspannung erfolgt.

Um das Ausmaß des Verschleißes beziehungsweise der bereits erfolgten axialen Bewegung des Gleitringes bewerten zu können, ist ein Positionssensor zur Erfassung der Position des Gleitringes in der Axialrichtung vorgesehen.

Erfindungsgemäß ist ferner ein Temperatursensor auf einer dem das Fluid führenden Kanal und/oder Raum abgewandten Leckageseite der Dichtfläche vorgesehen. Der Temperatursensor erfasst zumindest mittelbar oder direkt eine Temperatur, die abhängig von der Größe eines aus dem Kanal und/oder Raum über die Dichtfläche übertretenden Leckagestromes ist. Je größer der Leckagestrom ist, desto dichter liegt der erfasste Temperaturwert an der Temperatur des im Kanal und/oder Raum geführten Fluids, und zwar aufgrund der Wärmeübertragung zwischen dem Leckagestrom und dem Temperatursensor zumindest auch durch erzwungene Konvektion. Unter Größe des Leckagestromes wird beispielsweise der Volumenstrom und/oder Massenstrom des über die Dichtfläche tretenden Leckagestromes verstanden.

Wenn somit ein Schaden in der Dichtfläche oder dem Gegenring auftritt, der zu einem unerwünschten Austritt von Fluid aus dem Fluid führenden Kanal beziehungsweise Raum über die Dichtfläche hinweg führt, so führt dieser zumindest gegenüber einem Sollzustand verstärkte Leckagestrom zu einer Temperaturänderung auf der dem Fluid führenden Kanal/Raum abgewandten Seite, der sogenannten Leckageseite, der Dichtfläche. Diese Temperaturänderung beziehungsweise ein entsprechender Temperaturwert wird mit dem Temperatursensor erfasst. Durch die Erfassung kann dann festgestellt werden, wann ein unerwünscht großer Leckagestrom vorliegt.

Bei der dem das Fluid führenden Kanal/Raum abgewandten Leckageseite der Dichtfläche handelt es sich bezogen auf eine Strömungsrichtung des Fluids aus dem das Fluid führenden Kanal beziehungsweise Raum über die Dichtfläche hinweg um eine stromabwärts zur Dichtfläche gelegene Position beziehungsweise einen stromabwärts zur Dichtfläche gelegenen Bereich.

Der Temperatursensor kann dabei eine Temperatur erfassen, die abhängig von der Größe eines im regulären Betrieb der Gleitringdichtung aus dem Kanal und/oder Raum über die Dichtfläche übertretenden Leckagestromes ist. Somit wird während des regulären Betriebs der Gleitringdichtung der Verschleiß der Gleitringdichtung insbesondere kontinuierlich überwacht. Es ist nicht notwendig, dass die Gleitringdichtung in einem Testbetrieb betrieben wird, in welchem dem in dem Kanal und/oder Raum geführten Fluid eine zusätzliche Komponente oder ein zusätzliches Medium zugegeben wird. Vielmehr ist nur das im regulären Betrieb ohnehin vorhandene Fluid in dem Kanal und/oder Raum vorgesehen, sodass der Leckagestrom, der den gesamten über die Gleitringdichtung strömenden Strom ausbildet, auch nur durch einen Teil dieses Fluids gebildet wird. Dieses Fluid kann auch als Arbeitsmedium bezeichnet werden.

Bevorzugt weist der Positionssensor wenigstens einen am Gleitring befestigten, beispielsweise in wenigstens eine Bohrung, insbesondere Radialbohrung eingebrachten, oder in der Axialrichtung gegen den Gleitring abgestützten und sich in der Axialrichtung mit dem Gleitring bewegenden Magneten auf, sowie einen radial außerhalb des Gleitringes positionierten stationären Sensor, der die Position des Magneten in Axialrichtung erfasst. Der stationäre Sensor ist beispielsweise als Hall-Sensor ausgebildet. Ein solcher Hall-Sensor wird insbesondere von einem elektrischen Strom durchflossen und erzeugt eine Ausgangsspannung, die proportional zum Produkt aus dem Strom und einer magnetischen Flussdichte ist, die durch den dem Gleitring zugeordneten Magneten erzeugt wird.

Insbesondere ist in dem stationären Sensor, beispielsweise dem Hall-Sensor, auch der Temperatursensor integriert.

Beispielsweise weist der stationäre Sensor ein in dem Leckagestrom positioniertes Sensorgehäuse auf, innerhalb von welchem oder an welchem der Temperatursensor positioniert ist. Gemäß einer vorteilhaften Ausführungsform wird der Temperatursensor vom Sensorgehäuse vollständig eingeschlossen,

Gemäß einer Ausführungsform der Erfindung ist der stationäre Sensor als Hall-Sensor ausgeführt und es ist ferner eine Steuervorrichtung vorgesehen, die insbesondere in dem Hall-Sensor, beispielsweise dem genannten Sensorgehäuse, integriert ist, wobei die Steuervorrichtung in Abhängigkeit eines mit dem Temperatursensor erfassten Temperaturwertes eine Temperaturabhängigkeit eines vom Hall-Sensor erzeugten Ausgangswertes, insbesondere in Form der Ausgangsspannung, kompensiert. Dabei kann der Hall-Sensor als analoger Hall-Sensor ausgeführt sein, in welchem der durch ihn fließende elektrische Strom geregelt wird, um die Temperaturabhängigkeit zu kompensieren, oder als digitaler Hall-Sensor, in welchem eine Temperaturabhängigkeit durch eine digitale Korrekturrechnung kompensiert wird.

Insbesondere ist der Gleitring in der Axialrichtung beweglich in einem Gehäuse gelagert und elastisch gegen dieses abgestützt, wobei das Gehäuse den Gleitring in Umfangsrichtung umschließt und der stationäre Sensor außen am Gehäuse befestigt ist. Beispielsweise weist das Gehäuse einen stirnseitigen Boden und einen daran angeschlossenen Umfangsrand auf, der den Gleitring in der Umfangsrichtung umschließt. Der Umfangsrand kann einen nach innen vorstehenden Vorsprung, insbesondere in Form einer Umbördelung, aufweisen, der/die einen axialen Anschlag für den Gleitring bildet, wobei zwischen dem Boden und einer dem axialen Anschlag abgewandten Stirnseite des Gleitringes ein Federelement, beispielsweise in Form einer Druckfeder, insbesondere Wellfeder, vorgesehen ist, welche den Gleitring elastisch in Richtung des Anschlages mit Druck beaufschlagt. Der Anschlag verhindert dann, dass sich der Gleitring aus dem Gehäuse heraus bewegen kann.

Der Gleitring kann mittels eines Dichtelementes, beispielsweise eines O-Ringes, gegen das Gehäuse abgedichtet sein, insbesondere in der Radialrichtung.

Das Gehäuse kann beispielsweise aus Stahl beziehungsweise Stahlblech hergestellt sein.

Der Positionssensor ist insbesondere derart ausgeführt, dass er nicht nur die Endpositionen eines noch gar nicht verschlissenen Gleitringes und eines vollständig verschlissenen Gleitringes erfasst, sondern auch zwischen diesen Endpositionen vorhandene Zwischenpositionen. Insbesondere wird eine kontinuierliche Bewegung des Gleitringes in der Axialrichtung in jeder Position erfasst.

Gemäß einer besonders vorteilhaften Ausführungsform ist der Gleitring als hohlzylinderförmiger Kohlering ausgeführt oder umfasst einen solchen hohlzylinderförmigen Kohlering, wobei der Kohlering eine die Dichtfläche ausbildende Stirnseite aufweist. Die Stirnseite kann dabei in der Axialrichtung gegenüber einer Anschlagfläche des Gleitringes hervorstehen, welche bei einem maximalen axialen Versatz des Gleitringes in dem Gehäuse an dem genannten Gehäusevorsprung anschlägt.

Gemäß einer Ausführungsform der Erfindung ist der wenigstens eine Magnet über ein Zwischenbauteil, beispielsweise einen sich ebenfalls an der Anschlagfläche abstützenden Schlitten, an dem Gleitring angeschlossen, derart, dass er sich in der Axialrichtung zusammen mit dem Gleitring bewegt. Beispielsweise wird das Bauteil oder der Schlitten elastisch gegen die Anschlagfläche gedrückt.

Gemäß einer Ausführungsform der Erfindung ist der Gleitring stationär und der Gegenring läuft relativ zum Gleitring um, das heißt rotiert um die Drehachse.

Gemäß dem erfindungsgemäßen Verfahren wird mit dem Positionssensor die Position des Gleitringes in der Axialrichtung erfasst, und mit dem Temperatursensor wird eine Temperatur erfasst, und zwar auf der dem das Fluid führenden Kanal beziehungsweise Raum abgewandten Leckageseite der Dichtfläche. Die Temperatur ist abhängig von der Größe eines aus dem Kanal beziehungsweise Raum über die Dichtfläche übertretenden Leckagestromes. In Abhängigkeit von der Erfassung der Temperatur und in Abhängigkeit von der Erfassung der Position des Gleitringes in der axialen Richtung wird ein Verschleißzustand der Gleitringdichtung ermittelt.

Obwohl bei den vorstehenden und folgenden Ausführungsbeispielen der Erfindung der sich in Axialrichtung zur Kompensation seines Verschleißes bewegende Ring als Gleitring bezeichnet wurde und der vergleichsweise härtere Ring, der insbesondere nicht oder weniger verschleißt, als Gegenring bezeichnet wurde, umfasst die vorliegende Erfindung auch Ausführungsformen, bei welchen nicht oder nicht nur der sich in der Axialrichtung bewegende Ring stirnseitig verschleißt, sondern auch solche Ausführungsformen, bei welchen ein in der Axialrichtung stationärer Ring gleich weich oder weicher als der in der Axialrichtung bewegliche Ring ausgeführt ist und somit zusätzlich zu dem in der Axialrichtung beweglichen Ring oder anstelle des in der Axialrichtung beweglichen Ringes an seiner Stirnseite verschleißt.

Durch die erfindungsgemäße Lösung kann der Verschleiß einer Gleitringdichtung besser erfasst werden, nämlich auch Schadenszustände beziehungsweise Verschleißzustände, die über den üblichen Abrieb hinausgehen. Zugleich ermöglicht die Erfindung die verbesserte Erfassung ohne die Notwendigkeit eines bedeutenden zusätzlichen Bauraumes, insbesondere wenn der Temperatursensor in dem Sensorgehäuse oder an dem Sensorgehäuse vorgesehen ist. Die Nutzung des Temperatursensors für verschiedene Aufgaben - Temperaturkompensation und Erfassung eines unerwünschten Leckagestromes - ermöglicht eine Verbesserung, ohne bedeutende Erhöhung der Hardware-Kosten.

Wenn beispielsweise ein vergleichsweise warmes Fluid durch den Kanal beziehungsweise Raum, insbesondere einen Kanal einer Drehdurchführung geleitet wird, so kann der erfasste Temperaturwert mit einem vorgegebenen Grenzwert verglichen werden und bei Erreichen oder Überschreiten des Grenzwertes durch den erfassten Temperaturwert auf einen unzulässig erhöhten Leckagestrom geschlossen werden. Alternativ kann die Anstiegsgeschwindigkeit eines erfassten Temperaturverlaufs mit einer vorgegebenen Aufheizkurve verglichen werden, und bei Erreichen oder Überschreiten der vorgegebenen Aufheizkurve auf einen unzulässigen Leckagestrom geschlossen werden. Wenn das durch den wenigstens einen Kanal beziehungsweise Raum geführte Fluid eine niedrigere Temperatur als die Umgebung, in welcher der Temperatursensor positioniert ist, aufweist, so kann die Bewertung analog bei Unterschreiten eines vorgegebenen Grenzwertes oder einer vorgegebenen Abkühlkurve erfolgen.

Die Erfindung soll nachfolgend anhand eines Ausführungsbeispiels und den Figuren exemplarisch beschrieben werden.

Es zeigen:
- Figur 1: eine dreidimensionale Draufsicht auf eine erfindungsgemäß ausgeführte Gleitringdichtung;
- Figur 2: einen Axialschnitt durch die Gleitringdichtung aus der Figur 1;
- Figur 3: eine Vergrößerung des Bereiches mit dem Positionssensor;
- Figur 4: eine Darstellung analog der Figur 3 jedoch mit unmittelbar im Gleitring montierten Magneten.

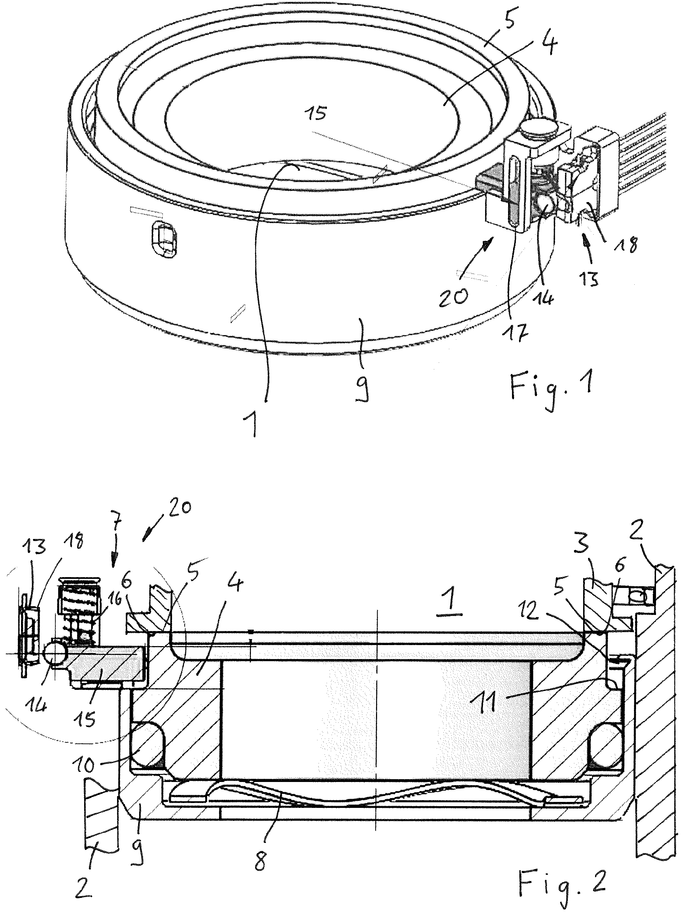

In der Figur 1 ist ein Ausführungsbeispiel einer erfindungsgemäßen Gleitringdichtung zur Abdichtung einer Drehdurchführung gezeigt, mit einem Kanal 1, der ein Fluid aus einem stationären Bauteil in ein rotierendes Bauteil führt. Das stationäre Bauteil ist beispielsweise in der Figur 2 schematisch angedeutet und mit 2 beziffert und das rotierende Bauteil ist ebenfalls in der Figur 2 schematisch angedeutet und mit 3 beziffert.

Wie aus den Figuren 1 bis 4 ersichtlich ist, weist die Gleitringdichtung einen Gleitring 4 auf, der an einer axialen Stirnseite eine Dichtfläche 5 aufweist, wobei sich die Dichtfläche 5 an einer Gegenfläche 6 des rotierenden Bauteils 3 abstützt, um den Kanal 1 gegenüber der Umgebung beziehungsweise einer Leckageseite 7 abzudichten.

Der Gleitring 4 ist im Bereich seiner Dichtfläche 5 und/oder das rotierende Bauteil 3 ist im Bereich der Gegenfläche 6 aus einem verschleißenden Werkstoff hergestellt, wobei der Verschleiß durch Abrieb des Werkstoffes bei der Relativdrehung zwischen dem Gleitring 4 beziehungsweise der Dichtfläche 5 und der Gegenfläche 6 erfolgt. Um trotzdem die gewünschte Abdichtung im Bereich der Dichtfläche 5 beziehungsweise Gegenfläche 6 zu erzielen, ist der Gleitring 4 an seinem der Dichtfläche 5 abgewandten axialen Ende mittels eines Federelementes, hier einer Druckfeder oder Wellfeder 8, elastisch in einem Gehäuse 9 abgestützt.

Der Kanal 1 verläuft in Axialrichtung durch das Gehäuse 9 und den Gleitring 4 und bevorzugt auch durch die Wellfeder 8. Zur Abdichtung ist ein O-Ring 10 zwischen dem Gleitring 4 und dem Gehäuse 9 vorgesehen.

Der Gleitring 4 weist eine Schulter oder Anschlagfläche 11 auf, die bei einer ausfahrenden Bewegung des Gleitringes 4 in Axialrichtung aus dem Gehäuse 9 an einem radial nach innen gerichteten Vorsprung 12 des Gehäuses 9 anschlägt, um ein weiteres Ausfahren des Gleitringes 4 aus dem Gehäuse 9 zu verhindern.

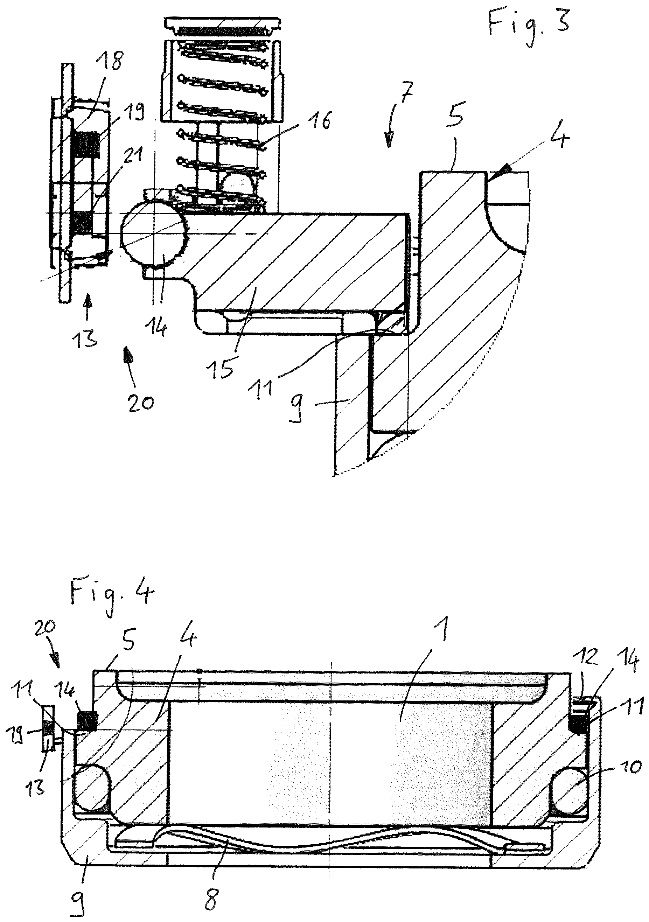

Am Gehäuse 9 ist ein stationärer Sensor 13 angeschlossen, der radial außerhalb zu einem Magneten 14 positioniert ist und als Hall-Sensor ausgeführt ist, der eine axiale Position des Magneten 14 und damit des Gleitringes 4 erfasst. Der Magnet 14 ist insbesondere unmittelbar am Gleitring 4 angeschlossen, siehe die Figur 4, oder über ein Zwischenbauteil 15, das sich in der Axialrichtung gemeinsam mit dem Gleitring 4 bewegt und den Magneten 14 trägt, siehe die Figuren 1 bis 3.

Bevorzugt stützt sich der Magnet 14 oder das Zwischenbauteil 15 in Axialrichtung an der Anschlagfläche 11 ab.

Im in den Figuren 1 bis 3 gezeigten Ausführungsbeispiel ist das Zwischenbauteil 15 mittels eines Federelementes 16 elastisch gegen die Anschlagfläche 11 abgestützt. Alternativ käme auch ein starrer Anschluss des Zwischenbauteils 15 am Gleitring 4 in Betracht.

Im in der Figur 4 gezeigten Ausführungsbeispiel ist ein sich in Umfangsrichtung über den ganzen Umfang des Gleitringes 4 erstreckender Magnet 14 vorgesehen oder es sind mehrere Magneten 14 über dem Umfang des Gleitringes 4 verteilt angeordnet, um eine Verdrehung des Gleitringes 4 relative zum stationären Sensor 13 zu ermöglichen, ohne die Funktionsweise der Positionserfassung zu beeinträchtigen. Dies ist jedoch nicht zwingend.

Um die Dichtfläche 5 möglichst plan bearbeiten zu können, ist der stationäre Sensor 13 bevorzugt lösbar am Gehäuse 9 angeschlossen, beispielsweise mittels einer Rastverbindung. Damit ist es beispielsweise möglich, den stationären Sensor 13, insbesondere zusammen mit dem Zwischenbauteil 15 und der das Zwischenbauteil 15 verschiebbar haltenden Gleitschiene 17 vom Gehäuse 9 abzunehmen. Anschließend kann die Dichtfläche 5 beispielsweise geläppt werden.

Bei einer Ausführungsform mit Zwischenbauteil 15 weist das Gehäuse 9 vorteilhaft eine Ausklinkung auf, durch welche das Zwischenbauteil 15 radial von außen eingreift, um sich an der Anschlagfläche 11 abzustützen oder um das Zwischenbauteil 15 leichter am Gleitring 4 insbesondere starr befestigen zu können.

Der stationäre Sensor 13 weist ein Sensorgehäuse 18 auf, in welches ein Temperatursensor 19 integriert ist. Der Temperatursensor 19 erfasst die Temperatur eines aus dem Kanal 1 über die Dichtfläche 5 übertretenden Leckagestroms des im Kanal 1 geführten Fluids, wobei die erfasste Temperatur abhängig von der Größe des Leckagestromes ist, weil durch die Anordnung des Temperatursensors 19 beziehungsweise des stationären Sensors 13 im Leckagestrom mit zunehmendem Leckagestrom der Wärmeübergang zwischen dem Leckagestrom und dem stationären Sensor 13 beziehungsweise Temperatursensor 19 vergrößert wird.

Der stationäre Sensor 19 bildet ferner zusammen mit dem Magneten 14 einen Positionssensor 20 zur Erfassung der Position des Gleitringes 4 in der Axialrichtung.

Der Positionssensor 20 ist als Hall-Sensor ausgeführt und der Temperatursensor 19 wird ferner verwendet, um die Temperaturabhängigkeit der vom Hall-Sensor erfassten Messgröße zu kompensieren. Hierfür kann im Sensorgehäuse 18 oder außerhalb von diesem eine Steuervorrichtung 21 vorgesehen sein, die die Positionserfassung und insbesondere die Leckagestromerfassung steuert.

### Bezugszeichenliste

- 1: Kanal
- 2: stationäres Bauteil
- 3: rotierendes Bauteil
- 4: Gleitring
- 5: Dichtfläche
- 6: Gegenfläche
- 7: Leckageseite
- 8: Wellfeder
- 9: Gehäuse
- 10: O-Ring
- 11: Anschlagfläche
- 12: Vorsprung
- 13: stationärer Sensor
- 14: Magnet
- 15: Zwischenbauteil
- 16: Federelement
- 17: Gleitschiene
- 18: Sensorgehäuse
- 19: Temperatursensor
- 20: Positionssensor
- 21: Steuervorrichtung

## Patentansprüche

1. Gleitringdichtung zur Abdichtung wenigstens eines sich in einem stationären Bauteil (2) und/oder einem rotierenden Bauteil (3) erstreckenden, ein Fluid führenden Kanals (1) und/oder Raumes gegenüber der Umgebung,
mit einem Gleitring (4), der sich in Axialrichtung gegen einen Gegenring dichtend abstützt und zur Kompensation eines Verschleißes an seiner stirnseitigen Dichtfläche (5) oder an einer Gegenfläche elastisch und in der Axialrichtung beweglich mit dieser Dichtfläche (5) gegen den Gegenring abgestützt ist;
mit einem Positionssensor (20) zur Erfassung der Position des Gleitringes (4) in der Axialrichtung;
**dadurch gekennzeichnet, dass**
ein Temperatursensor (19) auf einer dem Kanal (1) und/oder Raum abgewandten Leckageseite (7) der Dichtfläche (5) vorgesehen ist, der eine Temperatur zumindest mittelbar erfasst, die abhängig von der Größe eines aus dem Kanal (1) und/oder Raum über die Dichtfläche (5) übertretenden Leckagestromes ist.

2. Gleitringdichtung gemäß Anspruch 1, **dadurch gekennzeichnet, dass** der Positionssensor (20) wenigstens einen am Gleitring (4) befestigten oder in der Axialrichtung gegen den Gleitring (4) abgestützten, sich in der Axialrichtung mit dem Gleitring (4) bewegenden Magneten (14) und einen radial außerhalb des Gleitringes (4) positionierten stationären Sensor (13), insbesondere Hall-Sensor, der die Position des Magneten (14) in der Axialrichtung erfasst, umfasst.

3. Gleitringdichtung gemäß Anspruch 2, **dadurch gekennzeichnet, dass** der Temperatursensor (19) in den stationären Sensor (13) integriert ist.

4. Gleitringdichtung gemäß Anspruch 3, **dadurch gekennzeichnet, dass** der stationäre Sensor (13) ein in dem Leckagestrom positioniertes Sensorgehäuse (18) aufweist, innerhalb von welchem oder an welchem der Temperatursensor (19) positioniert ist, wobei der Temperatursensor (19) insbesondere vollständig im Sensorgehäuse (18) eingeschlossen ist.

5. Gleitringdichtung gemäß einem der Ansprüche 3 oder 4, **dadurch gekennzeichnet, dass** der stationäre Sensor (13) als Hall-Sensor ausgebildet ist und eine Steuervorrichtung (21) vorgesehen ist, insbesondere im Hall-Sensor integriert ist, welche in Abhängigkeit eines mit dem Temperatursensor (19) erfassten Temperaturwertes eine Temperaturabhängigkeit eines vom Hall-Sensor erzeugten Ausgangswertes, insbesondere in Form einer Ausgangsspannung, kompensiert.

6. Gleitringdichtung gemäß einem der Ansprüche 2 bis 5, **dadurch gekennzeichnet, dass** der Gleitring (4) in der Axialrichtung beweglich in einem Gehäuse (9) gelagert und elastisch gegen dieses abgestützt ist, wobei das Gehäuse (9) den Gleitring (4) in Umfangsrichtung umschließt, und der stationäre Sensor (13) außen am Gehäuse (9) befestigt ist.

7. Gleitringdichtung gemäß einem der Ansprüche 1 bis 6, **dadurch gekennzeichnet, dass** der Gleitring (4) einen hohlzylinderförmigen Kohlering umfasst oder aus einem solchen gebildet ist, der eine die Dichtfläche (5) ausbildende Stirnseite aufweist.

8. Gleitringdichtung gemäß einem der Ansprüche 1 bis 7, **dadurch gekennzeichnet, dass** der Gleitring (4) stationär ist und der Gegenring relativ zum Gleitring (4) umläuft.

9. Verfahren zum Überwachen des Verschleißes einer Gleitringdichtung, die gemäß einem der Ansprüche 1 bis 8 ausgebildet ist, **dadurch gekennzeichnet, dass** mit dem Positionssensor (20) die Position des Gleitringes (4) in der Axialrichtung erfasst wird und mit dem Temperatursensor (19) eine Temperatur erfasst wird, die abhängig von der Größe eines aus dem Kanal (1) und/oder Raum über die Dichtfläche (5) übertretenden Leckagestromes ist, und in Abhängigkeit von der Erfassung der Position und der Temperatur ein Verschleißzustand der Gleitringdichtung ermittelt wird.

10. Verfahren gemäß Anspruch 9 zum Überwachen des Verschleißes einer Gleitringdichtung, die gemäß einem der Ansprüche 5 bis 8 ausgeführt ist, **dadurch gekennzeichnet, dass** ein mit dem Temperatursensor (19) erfasster Temperaturwert zur Kompensation einer Temperaturabhängigkeit eines vom Hall-Sensor erzeugten Ausgangswertes, insbesondere in Form einer Ausgangsspannung, herangezogen wird.

11. Verfahren gemäß einem der Ansprüche 9 oder 10, **dadurch gekennzeichnet, dass** der Leckagestrom ausschließlich durch einen Teil des in einem regulären Betrieb durch den Kanal (1) und/oder Raum geleiteten Fluids gebildet wird.

12. Verfahren gemäß einem der Ansprüche 9 bis 11, **dadurch gekennzeichnet, dass** der Verschleiß der Gleitringdichtung während eines regulären Betriebs der Gleitringdichtung, insbesondere fortlaufend, erfasst wird.

## Claims

1. Mechanical seal for sealing at least one fluid-conducting channel (1) and/or space extending in a stationary component (2) and/or a rotating component (3) from the environment,
having a slide ring (4) which is supported in a sealing manner in the axial direction against a counter ring and, to compensate for wear on its front-end seal face (5) or on a counter face, is supported against the counter ring elastically and movably in the axial direction with this seal face (5);
having a position sensor (20) for detecting the position of the slide ring (4) in the axial direction;
**characterized in that**
a temperature sensor (19) is provided on a leakage side (7) of the seal face (5) facing away from the channel (1) and/or space, which sensor at least indirectly detects a temperature which is dependent on the magnitude of a leakage flow passing from the channel (1) and/or space via the seal face (5).

2. Mechanical seal according to claim 1, **characterized in that** the position sensor (20) comprises at least one magnet (14) fixed to the slide ring (4) or supported in the axial direction against the slide ring (4) and moving with the slide ring (4) in the axial direction, and a stationary sensor (13), in particular a Hall sensor, positioned radially outside the slide ring (4) and detecting the position of the magnet (14) in the axial direction.

3. Mechanical seal according to claim 2, **characterized in that** the temperature sensor (19) is integrated in the stationary sensor (13).

4. Mechanical seal according to claim 3, **characterized in that** the stationary sensor (13) comprises a sensor housing (18) positioned in the leakage flow, within which or on which the temperature sensor (19) is positioned, wherein the temperature sensor (19) is in particular completely enclosed in the sensor housing (18).

5. Mechanical seal according to one of claims 3 or 4, **characterized in that** the stationary sensor (13) is designed as a Hall sensor and a control device (21) is provided, in particular integrated in the Hall sensor, which compensates for a temperature dependence of an output value generated by the Hall sensor, in particular in the form of an output voltage, as a function of a temperature value detected by the temperature sensor (19).

6. Mechanical seal according to one of claims 2 to 5, **characterized in that** the slide ring (4) is mounted in a housing (9) so as to be movable in the axial direction and is elastically supported against said housing, wherein the housing (9) encloses the slide ring (4) in the circumferential direction, and the stationary sensor (13) is attached to the outside of the housing (9).

7. Mechanical seal according to one of claims 1 to 6, **characterized in that** the slide ring (4) comprises or is formed from a hollow cylindrical carbon ring having an end face forming the seal face (5).

8. Mechanical seal according to one of claims 1 to 7, **characterized in that** the slide ring (4) is stationary and the counter ring rotates relative to the slide ring (4).

9. Method for monitoring the wear of a mechanical seal which is designed according to one of claims 1 to 8, **characterized in that** the position of the slide ring (4) in the axial direction is detected with the position sensor (20) and a temperature is detected with the temperature sensor (19), which temperature is dependent on the size of a leakage flow passing from the channel (1) and/or space via the seal face (5), and a state of wear of the mechanical seal is determined as a function of the detection of the position and the temperature.

10. Method according to claim 9 for monitoring the wear of a mechanical seal which is designed according to one of claims 5 to 8, **characterized in that** a temperature value detected with the temperature sensor (19) is used to compensate for a temperature dependence of an output value generated by the Hall sensor, in particular in the form of an output voltage.

11. Method according to one of claims 9 or 10, **characterized in that** the leakage flow is formed exclusively by a part of the fluid passed through the channel (1) and/or space in a regular operation.

12. Method according to one of claims 9 to 11, **characterized in that** the wear of the mechanical seal is detected during regular operation of the mechanical seal, in particular continuously.

## Revendications

1. Garniture mécanique d'étanchéité pour l'étanchéité vis-à-vis de l'environnement d'au moins un conduit (1) et/ou un espace s'étendant dans une pièce stationnaire (2) et/ou une pièce en rotation (3) et acheminant un fluide,
avec une bague glissante (4) qui s'appuie de façon étanche dans le sens axial contre une contre-bague et qui s'appuie de façon élastique et mobile dans le sens axial par sa face d'étanchéité (5) contre la contre-bague pour compenser son usure sur cette face d'étanchéité (5) ou sur une surface opposée ;
avec un capteur de position (20) pour détecter la position de la bague glissante (4) dans le sens axial ;
**caractérisée en ce qu'**un capteur de température (19) est prévu sur un côté de fuite (7) de la face d'étanchéité (5) tourné à l'opposé du conduit (1) et/ou de l'espace, qui détecte au moins indirectement une température dépendant de la grandeur d'un courant de fuite sortant du conduit (1) et/ou de l'espace par la face d'étanchéité (5).

2. Garniture mécanique d'étanchéité selon la revendication 1, **caractérisée en ce que** le capteur de position (20) comprend au moins un aimant (14) fixé sur la bague glissante (4) ou qui s'appuie dans le sens axial contre la bague glissante (4) et qui se déplace dans le sens axial avec la bague glissante (4) et un capteur (13) stationnaire positionné à l'extérieur de la bague glissante (4) dans le sens radial, en particulier un capteur à effet Hall qui détecte la position de l'aimant (14) dans le sens axial.

3. Garniture mécanique d'étanchéité selon la revendication 2, **caractérisée en ce que** le capteur de température (19) est intégré dans le capteur stationnaire (13).

4. Garniture mécanique d'étanchéité selon la revendication 3, **caractérisée en ce que** le capteur stationnaire (13) présente un boîtier de capteur (18) positionné dans le courant de fuite, à l'intérieur duquel ou sur lequel le capteur de température (19) est positionné, le capteur de température (19) étant en particulier enfermé complètement dans le boîtier de capteur (18).

5. Garniture mécanique d'étanchéité selon l'une des revendications 3 ou 4, **caractérisée en ce que** le capteur stationnaire (13) est conformé comme un capteur à effet Hall et il est prévu un dispositif de commande (21), en particulier intégré dans le capteur à effet Hall, qui compense en fonction d'une valeur de température détectée par le capteur de température (19) une dépendance de la température d'une valeur de sortie produite par le capteur à effet Hall, en particulier sous la forme d'une tension de sortie.

6. Garniture mécanique d'étanchéité selon l'une des revendications 2 à 5, **caractérisée en ce que** la bague glissante (4) est supportée de façon mobile dans le sens axial dans un boîtier (9) et s'appuie de façon élastique contre celui-ci, le boîtier (9) entourant la bague glissante (4) dans le sens de la circonférence et le capteur stationnaire (13) étant fixé sur l'extérieur du boîtier (9).

7. Garniture mécanique d'étanchéité selon l'une des revendications 1 à 6, **caractérisée en ce que** la bague glissante (4) comprend ou est conformée comme un anneau en carbone en forme de cylindre creux qui comporte une face d'extrémité formant la face d'étanchéité (5).

8. Garniture mécanique d'étanchéité selon l'une des revendications 1 à 7, **caractérisée en ce que** la bague glissante (4) est stationnaire et la contre-bague tourne par rapport à la bague glissante (4).

9. Procédé pour surveiller l'usure d'une garniture mécanique d'étanchéité conformée selon l'une des revendications 1 à 8, **caractérisé en ce que** le capteur de position (20) détecte la position de la bague glissante (4) dans le sens axial et le capteur de température (19) détecte une température qui dépend de la grandeur d'un courant de fuite sortant du conduit (1) et/ou de l'espace par la face d'étanchéité (5) et un état d'usure de la garniture mécanique d'étanchéité est déterminé en fonction de la position et de la température détectées.

10. Procédé selon la revendication 9 pour surveiller l'usure d'une garniture mécanique d'étanchéité conformée selon l'une des revendications 5 à 8, **caractérisé en ce qu'**une valeur de température captée par le capteur de température (19) est utilisée pour compenser une dépendance de la température d'une valeur de sortie produite par le capteur à effet Hall, en particulier sous la forme d'une tension de sortie.

11. Procédé selon l'une des revendications 9 ou 10, **caractérisé en ce que** le courant de fuite est formé uniquement par une partie du fluide acheminé par le conduit (1) et/ou l'espace en fonctionnement normal.

12. Procédé selon l'une des revendications 9 à 11, **caractérisé en ce que** l'usure de la garniture mécanique d'étanchéité est détectée pendant un fonctionnement ordinaire de la garniture mécanique d'étanchéité, en particulier en continu.
